# EUROPÄISCHE PATENTSCHRIFT

(11) **EP 4 045 318 B1**
(45) Veröffentlichungstag und Bekanntmachung des Hinweises auf die Patenterteilung: **08.07.2026**
(21) Anmeldenummer: 20792645.2
(22) Anmeldetag: 16.10.2020
(51) Int. Cl.: B32B 27/20, B32B 7/12, B32B 15/082, B32B 15/085, B32B 15/20, B32B 27/08, B32B 27/30, C08L 23/06

(54) **VERBUNDFOLIE**
COMPOSITE FILM
FEUILLE DE LIAISON

(30) Priorität: 17.10.2019 EP 19203777
(43) Veröffentlichungstag der Anmeldung: 24.08.2022
(73) Patentinhaber: Constantia Teich GmbH, 3205 Weinburg (AT)
(72) Erfinder: WEGENBERGER, Alfred, 3550 Langenlois (AT); STEINER, Matthias, 3205 Weinburg (AT); FEICHTINGER, Roland, 3200 Ober-Grafendorf (AT); RELOTA, Patrick, 3151 St. Pölten (AT)
(74) Vertreter: Weiss Patentanwalts GmbH
(86) Internationale Anmeldenummer: PCT/EP2020/079159
(87) Internationale Veröffentlichungsnummer: WO 2021/074364

(56) Entgegenhaltungen:
- EP-A1- 1 216 824
- WO-A1-2012/113530
- US-A- 5 626 929
- US-A1- 2006 141 241

## Beschreibung

Die gegenständliche Offenbarung betrifft eine Verbundfolie, insbesondere zur Herstellung von Deckelplatinen, mit einer Aluminiumlage und einer Siegelschicht, wobei die Siegelschicht eine Polymermatrix mit zumindest einem ersten Polymerbestandteil und einem zweiten Polymerbestandteil aufweist, wobei der erste Polymerbestandteil ausgewählt ist aus einem Polyolefin und wobei der zweite Polymerbestandteil ausgewählt ist aus Polyolefin-Plastomeren und/oder Polyolefin-Elastomeren mit einer Dichte von jeweils unter 900 kg/m³ sowie Kombinationen solcher Materialien, und wobei die Verbundfolie eine auf die Aluminiumlage mehrlagig durch Coextrusion aufextrudierte Extrusionsschicht aufweist, wobei die Extrusionsschicht die Siegelschicht und eine zwischen der Siegelschicht und der Aluminiumlage angeordnete Haftvermittlerschicht aufweist. Die Offenbarung betrifft auch eine Deckelplatine aus einer Verbundfolie. Ferner betrifft die Offenbarung ein Verfahren zur Herstellung einer solchen Verbundfolie.

Zum Verschließen von Verpackungsbehältern, insbesondere im Nahrungsmittelbereich und im Bereich der Tiernahrungsmittel, werden sogenannte Deckelplatinen verwendet, die auf den Rand eines Verpackungsbehälters aufgesiegelt werden, um diesen zu verschließen. Zu Beispielen solcher Verpackungsbehälter zählen etwa Joghurtbecher, Trays oder ähnliche Behälter.

Insbesondere aufgrund der guten Verarbeitbarkeit, der vorteilhaften Barriereeigenschaften und der Wiederverwertbarkeit werden die Deckelplatinen häufig aus Aluminiumfolien hergestellt, die gegebenenfalls bedruckt, lackiert und/oder geprägt und auf der Siegelseite mit einem Siegelmaterial beschichtet sind. Je nach Ausführungsform werden als Siegelmaterial beispielsweise aufkaschierte Siegelfolien, Siegellacke, Extrusionsbeschichtungen oder Kombinationen dieser Techniken verwendet. Die auf die Aluminiumfolie aufgebrachten Schichten dienen dabei oftmals nicht nur zur Gewährleistung der Siegelbarkeit, sondern verleihen der Deckelplatine gegebenenfalls auch strukturelle Eigenschaften, wie etwa einen verbesserten Durchstoßwiderstand, eine vorteilhafteres Einreißverhalten, einen hohen Berstdruck oder ähnliches.

DE 10253110 B4 offenbart beispielsweise eine Deckelplatine mit einer Aluminiumschicht, die mit einer zumindest dreilagigen Coextrusionsbeschichtung beschichtet wird.

Da von der Platine nur der Aluminiumanteil problemlos wiederverwertbar ist, besteht ein Interesse daran, den Anteil der als Siegelschicht aufgebrachten Materialien zu verringern. Dem stehen jedoch technische Anforderungen entgegen. Einerseits muss nämlich die Siegellage stark genug sein, um eine ausreichend gute Siegelhaftung zu erzeugen, andererseits soll die Siegellage ein gutes Peelverhalten haben, d.h. es muss für den Konsumenten ohne übermäßigen Kraftaufwand (und ohne die Deckelplatine einzureißen) möglich sein, die Deckelplatine von dem Verpackungsbehälter abzuziehen. Zusätzlich ist zu berücksichtigen, dass die Siegelschicht für das zu verpackende Gut, beispielsweise Lebensmittel, geeignet ist. Um das Peelverhalten zu verbessern, kann dem Material der Siegellage ein Peelkraft-Additiv, insbesondere ein mineralischer Füllstoff, wie etwa Talk, zugesetzt sein. Der mineralische Füllstoff verschlechtert jedoch die Verarbeitbarkeit des Polymermaterials und führen zu Problemen beim Extrudieren. Daher müssen entsprechende Siegelschichten mit relativ hohen Schichtdicken extrudiert werden.

WO 2012/113530 A1 beschreibt eine Verbundfolie bestehend aus einer Aluminiumfolie, die mit einer coextrudierten Lage zusammengeführt wird. Die coextrudierte Lage besteht aus einer Mittelschicht aus mit einem Füllstoff versetzten Polypropylen und an beiden Seiten daran anschließenden Haftvermittlerschicht aus Maleinsäureanhydrid modifiziertem Polypropylen.

US 5,626,929 A beschreibt eine Verbundfolie mit einer Aluminiumlage, die mittels eines Urethanklebers mit einer Siegelschicht kaschiert ist. Die Siegelschicht besteht aus einer Mischung aus einem Buten-1/Ethylen Copolymer und einem Ethylen Homopolymer, sowie einem anorganischen Füllstoff. Die Siegelschicht hat eine Dicke von 24 g/m² bis 48 g/m², womit der Kunststoffanteil der Verbundfolie hoch ist.

US 2006/0141241 A1 lehrt eine Verbundfolie mit einer Aluminiumlage mit einer darauf aufextrudierten Siegelschicht mit einem anorganischen Füllstoff und einer dazwischenliegenden Haftvermittlerschicht. Die Dicke der Siegelschicht kann in Abhängigkeit vom Material der Siegelschicht zwischen 2,54 µm und 127 µm betragen. Bei geringen Dicken ist laut US 2006/0141241 A1 als Peelkraft-Additiv eine Mischung aus dem anorganischen Füllstoff in geringer Menge und einem organischen Polymer vorzuziehen.

Die gegenständliche Offenbarung hat unter anderem das Ziel, Aluminiumplatinen mit einer besseren Rezyklierbarkeit bereitzustellen, mit denen der Kunststoffanteil verringert werden kann und auf die Aluminiumlage aufextrudiert werden kann.

In einem ersten Aspekt betrifft die gegenständliche Offenbarung eine Verbundfolie, insbesondere zur Herstellung von Deckelplatinen, gemäß den Merkmalen von Anspruch 1. Weiters betrifft die gegenständliche Offenbarung ein Verfahren zur Herstellung einer solchen Verbundfolie, insbesondere zur Herstellung von Deckelplatinen, gemäß den Merkmalen von Anspruch 9. Die Extrusionsschicht kann damit besonders dünn hergestellt werden, wobei weiterhin bei der Herstellung hohe Liniengeschwindigkeit erreicht werden können. Dabei können Liniengeschwindigkeiten von etwa 400 m/min oder auch mehr gefahren werden, ohne dass im Schmelzfilm der Extrusionsschicht Fehler oder Löcher entstehen würden. Dies ist ein unerwarteter Effekt, da die Zugabe von Peelkraft-Additiven üblicherweise die Schmelzefestigkeit derart reduziert, dass die entsprechenden Extrusionslagen entweder dicker ausgeführt werden müssen, oder dass die Liniengeschwindigkeit heruntergesetzt werden muss. Durch die Zugabe des zweiten Polymerbestandteils lässt sich überraschender Weise die Dicke der Extrusionsschicht bei gleichbleibend hoher Liniengeschwindigkeit erheblich reduzieren. Gleichzeitig lässt sich eine gute und konstante Siegelnahtfestigkeit erzielen.

Die Extrusionsschicht weist erfindungsgemäß eine Gesamtdicke von 10 bis 18 g/m², insbesondere zwischen 10 und 15 g/m² auf, wobei die Dicke der Haftvermittlerschicht zwischen 3 und 5 g/m² beträgt und wobei die Dicke der Siegelschicht zwischen 6 und 10 g/m² beträgt. Durch diese sehr dünne Beschichtung kann das Verhältnis von Polymerbestandteilen zu Aluminium in der Verbundfolie auf einen sehr geringen Wert eingestellt werden, sodass mit der Verbundfolie Grenzwerte unterschritten werden können, welche die Rezyklierbarkeit der Verbundfolie definieren.

In vorteilhafter Weise ist der Anteil des ersten Polymerbestandteils an der Polymermatrix vorzugsweise zwischen etwa 30 und etwa 70 Gew.-%. Durch den ersten Polymerbestandteil kann insbesondere die Schmelzeviskosität auf einen vorteilhaften Wert eingestellt werden.

In einer vorteilhaften Ausführungsform kann der Anteil des zweiten Polymerbestandteils an der Polymermatrix zwischen 30 und 70 Gew.-% betragen. Durch eine Auswahl des Anteils des zweiten Polymerbestandteils kann insbesondere die Siegelnahtfestigkeit und der Berstdruck der aus der Verbundfolie hergestellten Deckelplatine gezielt vorteilhaft beeinflusst werden.

In einer weiteren vorteilhaften Ausführungsform kann die Aluminiumlage aus einer bevorzugt weichen oder halbharten Aluminiumfolie mit einer Dicke von 10 µm bis 70 µm, insbesondere von 20 bis 38 µm gebildet sein. Dies bietet sehr gute Barriereeigenschaften und erlaubt die Herstellung von Platinen, die die vom Kunden gewohnten und gewünschten Eigenschaften, wie etwa Haptik, Aussehen, Peelverhalten, etc. aufweisen.

Gegebenenfalls kann die Extrusionsschicht eine an die Siegelschicht angrenzende, außenliegende Deckschicht aufweisen, die vorzugsweise eine Dicke zwischen 1 und 3 g/m² aufweist. Die Deckschicht ist ausreichend dünn, um die Funktionalität der Siegelschicht zumindest negativ nicht wesentlich zu beeinträchtigen. Gegebenenfalls kann die Deckschicht der Oberfläche auch positive Eigenschaften verleihen, zum Beispiel indem sie die Hot-Tack-Eigenschaften verbessert. Die Deckschicht bietet insbesondere verfahrenstechnische Vorteile bei der Herstellung der Verbundfolie, da Ablagerungen des Peelkraft-Additivs an den Extrusionsdüsen vermieden werden.

Der zweite Polymerbestandteil kann vorzugsweise Polymerkomponenten aufweisen, die ausgewählt sind aus Ethylen/Propylen-Copolymer, insbesondere semikristallinem Ethylen-Propylen-Copolymer, welches vorzugsweise im Wesentlichen frei von Dienen ist, Alpha-Olefin-Copolymer, insbesondere Ethylen/Alpha-Olefin-Copolymer und/oder Propylen/Alpha-Olefin-Copolymer, Ethylen-Propylen-Dien-Elastomer, sowie Kombinationen solcher Stoffe.

Die gegenständliche Offenbarung betrifft weiters eine Deckelplatine zum Verschließen eines Verpackungsbehälters, wobei die Deckelplatine aus einer zuvor beschriebenen Verbundfolie, vorzugsweise durch Ausstanzen oder Ausschneiden, hergestellt ist.

Die gegenständliche Offenbarung betrifft weiters ein Verfahren zur Herstellung einer Deckelplatine zum Verschließen eines Verpackungsbehälters, wobei die Deckelplatine vorzugsweise durch Ausstanzen oder Ausschneiden aus einer Verbundfolie hergestellt wird, welche mit einem hierein beschriebenen Verfahren hergestellt wurde.

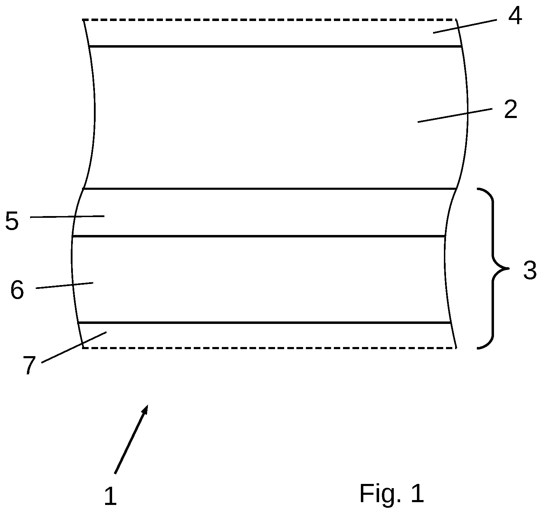

Die gegenständliche Erfindung wird nachfolgend unter Bezugnahme auf Figur 1 näher erläutert, die beispielhaft, schematisch und nicht einschränkend eine vorteilhafte Ausgestaltung der Erfindung zeigt.
Fig.1 zeigt dabei einen Schichtaufbau einer Deckelplatine.

Die in Fig. 1 in einem Querschnitt schematisch dargestellte Verbundfolie 1 zur Herstellung einer Deckelplatine weist im Wesentlichen eine Aluminiumlage 2 auf, die an ihrer dem Produkt zugewandten Seite mit einer mehrlagigen Extrusionsschicht 3 beschichtet ist. Gegebenenfalls kann auf der dem Produkt abgewandten Seite der Aluminiumlage 2 eine Primerschicht 4 für eine Bedruckung vorgesehen sein. Die Darstellung der Fig. 1 ist rein schematisch und nicht maßstäblich. Sie repräsentiert daher insbesondere nicht die tatsächlichen Dickenverhältnisse.

Die Extrusionsschicht 3 wird in einem Arbeitsgang als Coextrudat auf die Aluminiumlage 2 aufgebracht und weist eine Haftvermittlerschicht 5 und eine peelbare Siegelschicht 6 auf. Gegebenenfalls kann zusätzlich eine dünne Deckschicht 7 über der Siegelschicht vorgesehen sein. Die Extrusionsschicht 3 weist eine Gesamtdicke von zwischen 10 und 18 g/m² und bevorzugt zwischen 10 und 15 g/m² auf.

Die Aluminiumlage 2 besteht aus einer bevorzugt weichen oder halbharten Aluminiumfolie und weist eine bevorzugte Dicke von etwa 20 bis etwa 38 µm auf. Gegebenenfalls kann die Dicke auch darüber oder darunter liegen, wenn dies für die spezifische Anwendung gewünscht oder notwendig ist. Üblicherweise werden für Deckelplatinen Aluminiumlagen mit Dicken von beispielsweise zwischen 10 µm und 70 µm verwendet. Die Aluminiumlage 2 dient als Substrat, auf das in einem Coextrusionsverfahren die Lagen der Extrusionsschicht 3 aufgebracht werden.

Die Haftvermittlerschicht 5 verbessert die Haftung zwischen der Siegelschicht 6 und der Aluminiumlage 2, wobei im Stand der Technik zahlreiche Materialien bekannt sind, die zur Herstellung der Haftvermittlerschicht 5 verwendet werden können. Beispielsweise kann das Material der Haftvermittlerschicht 5 ausgewählt sein aus einem Ethylen-AcrylsäureCopolymer (EAA), Ethylen-Metacrylsäure (EMAA), Maleinsäure-Anhydrid modifiziertes LDPE (PE-g-MAOH), Terpolymer (z.B. Lotader^{™} von Arkema), lonomer und vergleichbaren Materialien, die im Fachbereich für diesen Zweck als geeignet erscheinen oder Kombinationen dieser Materialien.

Die Haftvermittlerschicht 5 soll insbesondere eine gute Haftung zwischen der Siegelschicht 6 und der Aluminiumlage 2 ohne erforderliche nachträgliche Wärmebehandlung, beispielsweise zum hinreichenden Aktivieren der Haftvermittlerschicht 5 ermöglichen. Eine solche Wärmebehandlung nach der Coextrusion erfolgt typischerweise bei Temperaturen zwischen 200°C und 300°C und könnte die Planlage der Verbundfolie 1 negativ beeinflussen. Beispielsweise kann das zum Schüsseln einer mit der Verbundfolie 1 hergestellten Deckelplatine führen, worunter die Verarbeitbarkeit der Deckelplatine, insbesondere das Aufsiegeln auf einen Behälter zum Verschließen des Behälters, leiden würde. Derartige Probleme können mit einem mit Maleinsäureanhydrid gepropften Haftvermittler (z.B. ein PP-MAOH oder PP-MAOH) Haftvermittlerschicht 5 entstehen. Die oben genannten Haftvermittler, die insbesondere auch mit Polyethylen basierten Siegelschichten 6 verwendet werden können, haften direkt auf der Aluminiumlage 2 und erfordern keine Wärmebehandlung nach der Coextrusion.

Die Haftvermittlerschicht 5 wird mit einer Schichtdicke zwischen 3 und 5 g/m² extrudiert. Die tatsächlich erforderliche Schichtdicke wird üblicherweise gemäß Herstellerangaben gewählt. Die Auswahl der Schichtdicke der Haftvermittlerschicht kann beispielsweise nach den folgenden Kriterien erfolgen. Die Schichtstärke wird so dünn wie möglich ausgewählt, weil bei insgesamt dünner Beschichtung eine für die Siegelung ausreichend dicke Siegelschicht benötigt wird und auch aus Kostengründen, weil die o.a. genannten Materialien meist teurer sind als die für die Siegelschicht verwendeten Materialien. Die Haftvermittlerschicht muss aber dick genug sein, dass eine durchgängig homogene Schicht gegeben bleibt, um eine ausreichend gute Haftung der Extrusionsbeschichtung an der Aluminiumfolie zu gewährleisten.

Die Siegelschicht 6 weist eine Polymermatrix auf, der mit einem Anteil von zwischen 10 und 35 Gew.-% ein Peelkraft-Additiv zugesetzt ist. Die Siegelschicht 6 ist mit einer Schichtdicke zwischen 6 und 10 g/m² extrudiert. Um eine bessere Rezyklierbarkeit der Verbundfolie zu erzielen, ist es sinnvoll, die Dicke der Extrusionsschicht, und dabei insbesondere die Dicke der Siegelschicht 6 zu minimieren. Die Siegelschicht 6 soll dabei so dünn wie möglich sein, wobei sie dennoch die erforderliche Siegelnahtfestigkeit und Peeleigenschaften gewährleisten soll. Eine weitere technische Einschränkung ist die Herstellbarkeit der Extrusionsschicht 3, da sich bei einer zu geringen Schichtdicke Löcher und andere Fehler in der Extrusionsschicht 3 bilden können. Die Minimierung der Dicke der Extrusionsschicht liegt bei Kenntnis der hierin offenbarten Lehren im Können des Durchschnittsfachmanns.

Das Peelkraft-Additiv ist ein mineralischer Füllstoff, der vorzugsweise lebensmittelverträglich ist. Vorzugsweise kann das Peelkraft-Additiv ausgewählt sein aus Talkum bzw. Talk, CaCO₃, Kreide, Silikaten (zum Beispiel Glimmer, Kaolin), anderen mineralischen Füllstoffen oder Kombinationen dieser Materialien. Das Peelkraft-Additiv kann vorzugsweise eine Korngröße aufweisen, welche auch bei der gegebenen dünnen Siegelschicht diese nicht oder nur vernachlässigbar beeinträchtigt. Insbesondere sollte die Korngröße D98 ("Top-Cut") beispielsweise unter 20 µm betragen.

Die Polymermatrix der Siegelschicht 6 weist zumindest zwei unterschiedliche Polymerbestandteile auf, die hierin als "erster Polymerbestandteil" und "zweiter Polymerbestandteil" bezeichnet werden. Gegebenenfalls können auch weitere Polymerbestandteile vorhanden sein. Die gewählten Bezeichnungen dienen rein der Unterscheidbarkeit und sind nicht einschränkend auszulegen.

Der erste Polymerbestandteil ist ein Polyolefin, insbesondere ein Polyethylen, vorzugsweise ein Polyethylen niedriger Dichte (LDPE). Es sind aber auch andere Polyethylentypen denkbar, wie beispielsweise lineares Polyethylen niedriger Dichte (LLDPE), Polyethylen mittlerer Dichte (MDPE) oder Polyethylen hoher Dichte (HDPE). Aufgrund der Molekülstruktur eignet sich aber LDPE besonders gut. Der Anteil des ersten Polymerbestandteils an der Polymermatrix beträgt zwischen etwa 30 und etwa 70 Gew.-%.

Der erste Polymerbestandteil dient als "Basismaterial" der Siegelschicht 6 und beeinflusst nicht nur die Materialkosten, sondern auch die grundlegenden Parameter, die für die Verarbeitbarkeit berücksichtigt werden müssen, wie etwa die Schmelzeviskosität, die Ausziehfähigkeit bzw. Schmelzefestigkeit und die Schmelzefilmstabilität der Polymermatrix bzw. der Siegelschicht 6 während des Extrudierens. Durch eine Veränderung des Anteils des ersten Polymerbestandteils kann insbesondere die Schmelzeviskosität der Polymermatrix verändert werden. Eine vorteilhafte Schmelzeviskosität der Polymermatrix liegt bei einem Schmelzflussindex (MFI-Wert) in einem Bereich zwischen etwa 2 und etwa 15 g/10 min.

Der zweite Polymerbestandteil ist ausgewählt aus Polyolefin-Plastomeren und/oder Polyolefin-Elastomeren mit jeweils einer Dichte von unter 900 kg/m³. Der Anteil des zweiten Polymerbestandteils an der Polymermatrix beträgt zwischen etwa 10 und etwa 40 Gew.-%.

Als "Polyolefin-Plastomere und Polyolefin-Elastomere" werden im Zusammenhang mit der gegenständlichen Offenbarung Copolymere auf Basis von Polyolefinen bezeichnet, die gegenüber den entsprechenden Homopolymeren eine geringere Dichte (von unter 900 kg/m³) und eine erhöhte Elastizität aufweisen. Zu Beispielen von Polyolefin-Plastomeren und/oder Polyolefin-Elastomeren zählen, ohne darauf beschränkt zu sein, Ethylen/Propylen-Copolymere, insbesondere Copolymere mit Propylen und einem geringen Anteil Ethylen, Ethylen/Alpha-Olefin-Copolymere, Propylen/Alpha-Olefin-Copolymere, Ethylen-Propylen-Dien-Elastomere, sowie Kombinationen solcher Stoffe. Polyolefin-Plastomere und Polyolefin-Elastomere kombinieren die Eigenschaften von Elastomeren (d.h. formfesten, aber elastisch verformbaren Stoffen) mit den Vorteilen anderer Kunststoffe, etwa deren Verarbeitbarkeit.

In der Fachliteratur wird mitunter eine Abgrenzung zwischen Polyolefin-Plastomeren und Polyolefin-Elastomeren vorgenommen, wobei im Allgemeinen derartige Materialien mit einer Dichte von 885 kg/m³ bis 900 kg/m³ als Polyolefin-Plastomere bezeichnet werden, und bei einer besonders geringen Dichte, also etwa bei einer Dichte von weniger als 885 kg/m³, die Bezeichnung Polyolefin-Elastomer bevorzugt verwendet wird. Diese Abgrenzung wird jedoch nicht immer einheitlich verwendet. Im Zusammenhang mit der gegenständlichen Offenbarung wird daher für alle diese Polymere der Verständlichkeit halber einheitlich die Bezeichnung "Polyolefin-Plastomere und/oder Polyolefin-Elastomeren" verwendet. Dieser Begriff, so wie er hierin verwendet wird, umfasst somit sowohl Stoffe, die im Fachbereich als Polyolefin-Plastomere bezeichnet werden, als auch Stoffe, die als Polyolefin-Elastomere bezeichnet werden.

Polyolefin-Plastomere und Polyolefin-Elastomere zeichnen sich allgemein aus durch eine hohe Zähigkeit und eine hohe Durchstoßfestigkeit, eine gute Verträglichkeit mit Füllstoffen und Ölen, sowie einer hervorragenden Mischbarkeit mit Polyolefinen aus.

In der praktischen Anwendung ist es wichtig, dass die Mischbarkeit der ersten, zweiten und gegebenenfalls weiteren Polymerbestandteile gewährleistet ist. Dies kann insbesondere durch Auswahl und Abstimmung der Materialparameter erfolgen, wobei auf die wichtigsten Parameter des zweiten Polymerbestandteils im Folgenden beispielhaft eingegangen wird.

Wichtige Parameter zur Beurteilung der Verarbeitbarkeit des Polymermaterials, sind Schmelzeindizes, insbesondere die Schmelze-Massefließrate (MFR) und die damit in Beziehung stehende Schmelze-Volumenfließrate (MVR). Im Zusammenhang mit der gegenständlichen Offenbarung wird unter den Begriff "Schmelze-Massefließrate" (MFR) und "Schmelze-Volumenfließrate" (MVR) der gemäß der Norm DIN EN ISO 1133 in der zum Prioritätszeitpunkt der gegenständlichen Anmeldung aktuellen Fassung ermittelte Wert bezeichnet. Der MFR wird in der Literatur und der Praxis auch als "Schmelzindex", "Melt Flow Rate", "Melt Mass-Flow Rate" oder "Melt Flow Index" (MFI) bezeichnet. Analog wird der MVR in der Literatur und in der Praxis auch als "Melt Volume Rate" oder "Melt Volume Index" (MVI) bezeichnet.

Bevorzugte Werte für die Schmelze-Massefließrate bei 2,16 kg und 190 °C des zweiten Polymerbestandteils liegen im Bereich zwischen 2 g/10 min und 15 g / 10 min.

Ein weiterer wichtiger Parameter für die Auswahl des zweiten Polymerbestandteils ist die Bruchdehnung. Die hierin für die Bruchdehnung angeführten Werte können gemäß der Norm DIN EN ISO 527 in der zum Prioritätszeitpunkt der gegenständlichen Anmeldung aktuellen Fassung ermittelt werden.

Bevorzugte Werte der Bruchdehnung des zweiten Polymerbestandteils entsprechen zumindest einem Vielfachen der Bruchdehnung des ersten Polymerbestandteils und betragen vorzugsweise mehr als 200%, insbesondere mehr als 1000 %.

Die Schmelztemperatur des zweiten Polymerbestandteils ist vorzugsweise niedriger als die Schmelztemperatur des ersten Polymerbestandteils. Die Schmelztemperatur kann dabei nach einem beliebigen Verfahren gemessen werden, solange für den ersten und den zweiten Polymerbestandteil dasselbe Verfahren verwendet wird (d.h. es ist sichergestellt, dass die Werte auf analoge Weise ermittelt und daher vergleichbar sind). Beispielsweise kann für die Ermittlung der Schmelztemperatur die Norm DIN EN ISO 3146 in der zum Prioritätszeitpunkt der gegenständlichen Anmeldung aktuellen Fassung herangezogen werden.

Bevorzugter Weise betragen die Werte der Schmelztemperatur des zweiten Polymerbestandteils weniger als 90 %, insbesondere weniger als 80 % der entsprechenden Schmelztemperatur des ersten Polymerbestandteils.

Zu den Polyolefin-Plastomeren bzw. Polyolefin-Elastomeren, die beispielsweise als zweiter Polymerbestandteil bzw. als Anteil des zweiten Polymerbestandteils verwendet werden können, zählen beispielsweise die unter den Bezeichnungen "Vistamaxx^{™}", vertrieben von Exxon Mobil Chemical, "Versify^{™}" und "Aplyfy^{™}", vertrieben von The Dow Chemical Company, "Queo^{™}", vertrieben von Borealis AG, "ESPRENE SPO^{™}" von Sumitomo Chemical oder "Tafmer^{™}", vertrieben von Mitsui Elastomers Singapore PTE LTD., im Handel erhältlichen Materialien. Gegebenenfalls können als zweiter Polymerbestandteil auch Kombinationen bzw. Mischungen dieser Materialien, gegebenenfalls mit weiteren Polyolefin-Plastomeren und/oder Polyolefin-Elastomeren anderer Art verwendet werden. Die gemäß der gegenständlichen Offenbarung verwendbaren Polyolefin-Plastomere und Polyolefin-Elastomeren sind auch nicht auf die derzeitig im Handel verfügbaren Produkte beschränkt, sondern umfassen alle Polyolefin-Plastomere und Polyolefin-Elastomere, die im Fachbereich bekannt sind oder sich aus den im Fachbereich bekannten Stoffen durch Parameterveränderungen, zu denen der Durchschnittsfachmann fähig ist, herstellen lassen. Polyolefin-Plastomere beziehungsweise Polyolefin-Elastomere, die beispielsweise als zweiter Polymerbestandteil bzw. als Anteil des zweiten Polymerbestandteils verwendet werden können, sind beispielsweise auch in den folgenden Patentdokumenten offenbart: WO 2007/115816 A1 offenbart Polyolefin-Elastomere auf Propylenbasis, die in diesem Dokument als "propylene based elastomer" bezeichnet werden. Diese weisen bis zu 95 Gew.-% einer ersten semikristallinen Polymerkomponente in der Form eines Copolymers aus Propylen und einem begrenzten Anteil an Ethylen auf.

US 2004/0236042 A1 offenbart ein Verfahren zur Herstellung von Polyolefin-Elastomeren, insbesondere von thermoplastischen Polymerzusammensetzungen mit einem überwiegenden Anteil an Propylen und einem geringeren Anteil an Ethylen.

US 7557172 B2 offenbart ein Polyolefin-Plastomer auf Ethylenbasis, welches ein Ethylen/Alpha-Olefin-Copolymer ist.

Ein höherer Anteil des zweiten Polymerbestandteils kann zwar die Verarbeitung beim Extrudieren schwieriger bzw. aufwendiger machen, jedoch wird die Siegelnahtfestigkeit der Siegelschicht 6 verbessert, insbesondere wenn diese sehr dünn ausgebildet ist. Neben der Siegelnahtfestigkeit kann durch eine Veränderung des Anteils des zweiten Polymerbestandteils auch der Berstdruck positiv beeinflusst werden.

Bei der Auswahl des Materials für den zweiten Polymerbestandteil ist zu berücksichtigen, dass der zweite Polymerbestandteil sich mit zunehmenden Maß wie ein Elastomer (d.h. gummiartig) verhält, je niedriger die Dichte ist. Dabei sinkt aber auch der Schmelzpunkt und die Klebrigkeit wird (aufgrund der Erweichung des Materials bei erhöhter Temperatur) erhöht. Dies kann zu Verarbeitungsproblemen bei der Extrusion (z. B. Kleben an der Kühlwalze) oder des fertigen Materials (z.B. Verblocken in der Rolle, Laufeigenschaften der Materialbahn) führen. Der Durchschnittsfachmann ist bei Kenntnis der hierin offenbarten Lehren von sich aus in der Lage, geeignete Materialkombinationen durch routinemäßige Arbeiten und Versuche sinnvoll auszuwählen und dabei die erwähnten Nebenbedingungen zu berücksichtigen.

Der Polymermatrix der Siegelschicht 6 können gegebenenfalls weitere Polymerbestandteile in einem Anteil von bis zu 25 Gew.-% zugesetzt sein.

Die weiteren Polymerbestandteile können insbesondere ausgewählt sein aus LLDPE (C₄, C₆, C₈), mLLDPE (C₄, C₆, C₈), Polypropylen-Homopolymer, Polypropylen-Copolymer, oder Kombinationen solcher Materialien.

Die weiteren Polymerbestandteile können etwa der Beeinflussung der Siegeleigenschaften dienen. Beispielsweise können diese auf spezielle Bechermaterialien abgestimmt werden, etwa Becher mit unterschiedlichen Anteilen an Polypropylen und/oder Polyethylen. Weiters kann es für eine Heißabfüllung (bei der bessere Hot-Tack-Eigenschaften erforderlich sind) vorteilhaft sein, den Schmelzpunkt des Siegelmaterials zu erhöhen, etwa indem als weiterer Polymerbestandteil ein C₆-Polymer verwendet wird, da dies einen höheren Schmelzpunkt hat, als etwa das LDPE des ersten Polymerbestandteils.

Die Deckschicht 7, falls eine solche vorgesehen ist, kann vorzugsweise mit einer Schichtdicke von 1 bis 3 g/m² extrudiert werden. Das Material der Deckschicht 7 ist vorzugsweise ausgewählt aus LDPE, LLDPE, MDPE, oder Kombinationen dieser Materialien.

Die Deckschicht 7 ist sehr dünn und beeinflusst daher die Siegeleigenschaften der Siegelschicht 6 zumindest in negativer Hinsicht nur unwesentlich. Das Vorsehen der Deckschicht 7 ist insbesondere verfahrenstechnisch vorteilhaft. Beispielsweise trennt die Deckschicht die Wandungen der Extrusionsdüsen von dem Material der Siegelschicht 6.

Dadurch werden Ablagerungen des mineralischen Füllstoffs, insbesondere Talkablagerungen an den Extrusionsdüsen, vermieden.

In der Beschreibung und den Ansprüchen bedeutet die Ausdrücke "im Wesentlichen" oder "etwa", sofern nichts anderes an Ort und Stelle angegeben ist, eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Bei Bezeichnungen wie bei: "ein Lösungsmittel" ist das Wort "ein" nicht als Zahlwort, sondern als unbestimmter Artikel oder als Fürwort anzusehen, wenn nicht aus dem Zusammenhang etwas anderes hervorgeht.

Der Begriff: "Kombination" bzw. "Kombinationen" steht, sofern nichts anderes angegeben ist, für alle Arten von Kombinationen, ausgehend von zwei der betreffenden Bestandteile bis zu einer Vielzahl oder aller derartiger Bestandteile, der Begriff: "enthaltend" steht auch für "bestehend aus".

Die in den einzelnen Ausgestaltungen und Beispielen angegebenen einzelnen Merkmale und Varianten können (sofern nicht an Ort und Stelle etwas anderes ausgeführt ist) mit denen der anderen Beispiele und Ausgestaltungen frei kombiniert und insbesondere zur Kennzeichnung der Erfindung in den Ansprüchen ohne zwangläufige Mitnahme der anderen Details der jeweiligen Ausgestaltung bzw. des jeweiligen Beispiels verwendet werden.

## Patentansprüche

1. Verbundfolie (1), insbesondere zur Herstellung von Deckelplatinen, mit einer Aluminiumlage (2) und einer Siegelschicht (6), wobei die Siegelschicht (6) eine Polymermatrix mit zumindest einem ersten Polymerbestandteil und einem zweiten Polymerbestandteil aufweist, wobei der erste Polymerbestandteil ausgewählt ist aus einem Polyolefin und wobei der zweite Polymerbestandteil ausgewählt ist aus Polyolefin-Plastomeren und/oder Polyolefin-Elastomeren mit einer Dichte von jeweils unter 900 kg/m³ sowie Kombinationen solcher Materialien, wobei die Verbundfolie (1) eine auf die Aluminiumlage (2) mehrlagig durch Coextrusion aufextrudierte Extrusionsschicht (3) aufweist, wobei die Extrusionsschicht (3) die Siegelschicht (6) und eine zwischen der Siegelschicht (6) und der Aluminiumlage (2) angeordnete Haftvermittlerschicht (5) aufweist, **dadurch gekennzeichnet, dass** der Polymermatrix der Siegelschicht (6) ein mineralischer Füllstoff als Peelkraft-Additiv, insbesondere Talk, zugesetzt ist und **das** Peelkraft-Additiv der Polymermatrix der Siegelschicht (6) mit einem Anteil zwischen 10 und 35 Gew.-% zugesetzt ist, **dass** die Extrusionsschicht (3) eine Gesamtdicke von 10 bis 18 g/m², insbesondere zwischen 10 und 15 g/m² aufweist, **und dass** die Dicke der Haftvermittlerschicht (5) zwischen 3 und 5 g/m² beträgt und die Dicke der Siegelschicht (6) mit dem Peelkraft-Additiv zwischen 6 und 10 g/m² beträgt.

2. Verbundfolie (1) nach Anspruch 1, **dadurch gekennzeichnet, dass** der Anteil des ersten Polymerbestandteils an der Polymermatrix vorzugsweise zwischen etwa 30 und etwa 70 Gew.-% beträgt.

3. Verbundfolie (1) nach Anspruch 1 oder 2, **dadurch gekennzeichnet, dass** der erste Polymerbestandteil ein Polyethylen ist, vorzugsweise ein Polyethylen niedriger Dichte.

4. Verbundfolie (1) nach einem der Ansprüche 1 bis 3, **dadurch gekennzeichnet, dass** der Anteil des zweiten Polymerbestandteils an der Polymermatrix zwischen 30 und 70 Gew.-% beträgt.

5. Verbundfolie (1) nach einem der Ansprüche 1 bis 4, **dadurch gekennzeichnet, dass** die Aluminiumlage (2) aus einer bevorzugt weichen oder halbharten Aluminiumfolie mit einer Dicke von 10 µm bis 70 µm, insbesondere von 20 bis 38 µm gebildet ist.

6. Verbundfolie (1) nach einem der Ansprüche 1 bis 5, **dadurch gekennzeichnet, dass** die Extrusionsschicht (3) eine an die Siegelschicht (6) angrenzende, außenliegende Deckschicht (7) aufweist, die vorzugsweise eine Dicke zwischen 1 und 3 g/m² aufweist.

7. Verbundfolie (1) nach einem der Ansprüche 1 bis 6, **dadurch gekennzeichnet, dass** der zweite Polymerbestandteil Polymerkomponenten aufweist, die ausgewählt sind aus Ethylen/Propylen-Copolymer, insbesondere semikristallinem Ethylen-Propylen-Copolymer, welches vorzugsweise im Wesentlichen frei von Dienen ist, Alpha-Olefin-Copolymer, insbesondere Ethylen/Alpha-Olefin-Copolymer und/oder Propylen/Alpha-Olefin-Copolymer, Ethylen-Propylen-Dien-Elastomer, sowie Kombinationen solcher Stoffe.

8. Deckelplatine zum Verschließen eines Verpackungsbehälters, wobei die Deckelplatine aus einer Verbundfolie (1) gemäß einem der Ansprüche 1 bis 7, vorzugsweise durch Ausstanzen oder Ausschneiden, hergestellt ist.

9. Verfahren zur Herstellung einer Verbundfolie (1), insbesondere zur Herstellung von Deckelplatinen, wobei das Verfahren die folgenden Schritte aufweist:
- Bereitstellen einer Aluminiumlage (2), und
- Aufextrudieren auf die Aluminiumlage (2) einer mehrlagigen Extrusionsschicht (3) umfassend eine an die Aluminiumlage (2) angrenzende Haftvermittlerschicht und eine an die Haftvermittlerschicht (5) angrenzende Siegelschicht (6),
wobei die Siegelschicht (6) eine Polymermatrix mit zumindest einem ersten Polymerbestandteil und einem zweiten Polymerbestandteil aufweist, wobei der erste Polymerbestandteil ausgewählt wird aus einem Polyolefin und wobei der zweite Polymerbestandteil ausgewählt wird aus Polyolefin-Plastomeren und/oder Polyolefin-Elastomeren mit einer Dichte von jeweils unter 900 kg/m³ sowie Kombinationen solcher Materialien, **dadurch gekennzeichnet, dass** der Polymermatrix der Siegelschicht (6) ein mineralischer Füllstoff als Peelkraft-Additiv, insbesondere Talk, mit einem Anteil zwischen 10 und 35 Gew.-% zugesetzt ist, **dass** die Extrusionsschicht (3) eine Gesamtdicke von 10 bis 18 g/m², insbesondere zwischen 10 und 15 g/m² aufweist, **und dass** die Dicke der Haftvermittlerschicht (5) zwischen 3 und 5 g/m² beträgt und die Dicke der Siegelschicht (6) mit dem Peelkraft-Additiv zwischen 6 und 10 g/m² beträgt.

10. Verfahren nach Anspruch 9, **dadurch gekennzeichnet, dass** der Anteil des ersten Polymerbestandteils an der Polymermatrix vorzugsweise zwischen etwa 30 und etwa 70 Gew.-% beträgt.

11. Verfahren nach Anspruch 9 oder 10, **dadurch gekennzeichnet, dass** der erste Polymerbestandteil ein Polyethylen ist, vorzugsweise ein Polyethylen niedriger Dichte.

12. Verfahren nach einem der Ansprüche 9 bis 11, **dadurch gekennzeichnet, dass** der Anteil des zweiten Polymerbestandteils an der Polymermatrix zwischen 30 und 70 Gew.-% beträgt.

13. Verfahren nach einem der Ansprüche 9 bis 11, **dadurch gekennzeichnet, dass** die Aluminiumlage (2) aus einer bevorzugt weichen oder halbharten Aluminiumfolie mit einer Dicke von 10 µm bis 70 µm, insbesondere von 20 bis 38 µm gebildet ist.

14. Verfahren nach einem der Ansprüche 9 bis 13, **dadurch gekennzeichnet, dass** die Extrusionsschicht (3) eine an die Siegelschicht (6) angrenzende, außenliegende Deckschicht (7) aufweist, die vorzugsweise eine Dicke zwischen 1 und 3 g/m² aufweist.

15. Verfahren zur Herstellung einer Deckelplatine zum Verschließen eines Verpackungsbehälters, wobei die Deckelplatine vorzugsweise durch Ausstanzen oder Ausschneiden aus einer Verbundfolie (1) hergestellt wird, welche mit einem Verfahren gemäß einem der Ansprüche 9 bis 14 hergestellt wurde.

## Claims

1. Composite film (1), in particular for producing lids, comprising an aluminum layer (2) and a sealing layer (6), where the sealing layer (6) comprises a polymer matrix, which has at least a first polymer constituent and a second polymer constituent, wherein a peel-force additive, wherein the first polymer constituent is selected from a polyolefin and the second polymer constituent is selected from polyolefin plastomers and/or polyolefin elastomers each having a density of less than 900 kg/m³, and from combinations of such materials, wherein the composite film (1) has an extrusion layer (3), which is extruded onto the aluminum layer (2) in multiple layers by coextrusion, wherein the extrusion layer (3) has the sealing layer (6) and an adhesion promoter layer (5), which is arranged between the sealing layer (6) and the aluminum layer (2) **characterized in that** a mineral filler as peel-force additive, such as talcum, is added to the polymer matrix of the sealing layer (6) and the peel-force additive being added to the polymer matrix of the sealing layer (6) in a proportion of between 10 and 35% by weight, **in that** the extrusion layer (3) has a total thickness of 10 to 18 g/m², in particular between 10 and 15 g/m², **and in that** the thickness of the adhesion promoter layer (5) is preferably between 3 and 5 g/m² and the thickness of the sealing layer (6) is preferably between 6 and 10 g/m².

2. Composite film (1) according to claim 1, **characterized in that** the proportion of the first polymer constituent in the polymer matrix is preferably between approximately 30 and approximately 70% by weight.

3. Composite film (1) according to either claim 1 or 2, **characterized in that** the first polymer constituent is a polyethylene, preferably a low density polyethylene.

4. Composite film (1) according to any of claims 1 to 3, **characterized in that** the proportion of the second polymer constituent in the polymer matrix is between 30 and 70% by weight.

5. Composite film (1) according to any of claims 1 to 4, **characterized in that** the aluminum layer (2) is formed from a preferably soft or semi-hard aluminum foil with a thickness of 10 to 70 µm, in particular 20 to 38 µm.

6. Composite film (1) according to any of claims 1 to 5, **characterized in that** the extrusion layer (3) has an outer top layer (7) adjoining the sealing layer (6), which outer top layer (7) preferably has a thickness of between 1 and 3 g/m².

7. Composite film (1) according to any of claims 1 to 6, **characterized in that** the second polymer constituent has polymer components selected from ethylene/propylene copolymer, in particular semi-crystalline ethylene-propylene copolymer, which is preferably essentially free of dienes, alpha-olefin copolymer, in particular ethylene/alpha-olefin copolymer and/or propylene/alpha-olefin copolymer, ethylene-propylene-diene elastomer, and from combinations of such substances.

8. Lid for closing a packaging container, the lid being produced from a composite film (1) according to any of claims 1 to 7, preferably by punching out or cutting out.

9. Method for producing a composite film (1), in particular for producing lids, the method comprising the following steps:
- providing an aluminum layer (2), and
- extruding an extrusion layer (3) onto the aluminum layer (2) in multiple layers, the extrusion layer (3) comprising an adhesion promoter layer adjoining the aluminum layer (2) and a sealing layer (6) adjoining the adhesion promoter layer (5),
wherein the sealing layer (6) comprises a polymer matrix, which has at least a first polymer constituent and a second polymer constituent, wherein the first polymer constituent is selected from a polyolefin and the second polymer constituent is selected from polyolefin plastomers and/or polyolefin elastomers each having a density of less than 900 kg/m³, and from combinations of such materials, **characterized in that** a mineral filler as peel-force additive, in particular talcum, is added to the polymer matrix of the sealing layer (6) in a proportion of between 10 and 35% by weight, **in that** the extrusion layer (3) has a total thickness of 10 to 18 g/m², in particular between 10 and 15 g/m², **and in that** the thickness of the adhesion promoter layer (5) is preferably between 3 and 5 g/m² and the thickness of the sealing layer (6) is preferably between 6 and 10 g/m².

10. Method according to claim 9, **characterized in that** the proportion of the first polymer constituent in the polymer matrix preferably being between approximately 30 and approximately 70% by weight.

11. Method according to either claim 9 or 10, **characterized in that** the first polymer constituent is a polyethylene, preferably a low density polyethylene.

12. Method according to any of claims 9 to 11, **characterized in that** the proportion of the second polymer constituent in the polymer matrix is between 30 and 70% by weight.

13. Method according to any of claims 9 to 11, **characterized in that** the aluminum layer (2) is formed from a preferably soft or semi-hard aluminum foil with a thickness of 10 to 70 µm, in particular 20 to 38 µm.

14. Method according to any of claims 9 to 13, **characterized in that** the extrusion layer (3) has an outer top layer (7) adjoining the sealing layer (6), which outer top layer (7) preferably has a thickness of between 1 and 3 g/m².

15. Method for producing a lid for closing a packaging container, the lid preferably being produced by punching out or cutting out from a composite film (1) which was produced using a method according to any of claims 9 to 14.

## Revendications

1. Feuille composite (1), en particulier pour la fabrication de films de couverture, comportant une couche d'aluminium (2) et une couche de scellage (6), dans laquelle la couche de scellage (6) présente une matrice polymère comportant au moins un premier constituant polymère et un second constituant polymère, dans laquelle le premier constituant polymère est choisi parmi une polyoléfine et dans laquelle le second constituant polymère est choisi parmi plastomères polyoléfiniques et/ou élastomères polyoléfiniques d'une masse volumique respectivement inférieure à 900 kg/m³ ainsi que des combinaisons de tels matériaux, dans laquelle la feuille composite (1) présente une couche d'extrusion (3) extrudée par coextrusion en plusieurs couches sur la couche d'aluminium (2), dans laquelle la couche d'extrusion (3) présente la couche de scellage (6) et une couche de promoteur d'adhérence (5) disposée entre la couche de scellage (6) et la couche d'aluminium (2), **caractérisée en ce qu'**une charge minérale est ajoutée à la matrice polymère de la couche de scellage (6) comme additif de force de pelage, en particulier du talc, et l'additif de force de pelage est ajouté à la matrice polymère de la couche de scellage (6) dans une proportion située entre 10 et 35 % en poids, **en ce que** la couche d'extrusion (3) présente une masse surfacique totale allant de 10 à 18 g/m², en particulier située entre 10 et 15 g/m², **et en ce que** la masse surfacique de la couche de promoteur d'adhérence (5) est située entre 3 et 5 g/m² et la masse surfacique de la couche de scellage (6) comportant l'additif de force de pelage est située entre 6 et 10 g/m².

2. Feuille composite (1) selon la revendication 1, **caractérisée en ce que** la proportion du premier constituant polymère dans la matrice polymère est de préférence située entre environ 30 et environ 70 % en poids.

3. Feuille composite (1) selon la revendication 1 ou 2,
**caractérisée en ce que** le premier constituant polymère est un polyéthylène, de préférence un polyéthylène basse densité.

4. Feuille composite (1) selon l'une des revendications 1 à 3,
**caractérisée en ce que** la proportion du second constituant polymère dans la matrice polymère est située entre 30 et 70 % en poids.

5. Feuille composite (1) selon l'une des revendications 1 à 4,
**caractérisée en ce que** la couche d'aluminium (2) est formée d'une feuille d'aluminium de préférence souple ou semi-rigide d'une épaisseur allant de 10 µm à 70 µm, en particulier de 20 à 38 µm.

6. Feuille composite (1) selon l'une des revendications 1 à 5,
**caractérisée en ce que** la couche d'extrusion (3) présente une couche de recouvrement (7) extérieure qui est adjacente à la couche de scellage (6) et qui présente de préférence une masse surfacique située entre 1 et 3 g/m².

7. Feuille composite (1) selon l'une des revendications 1 à 6,
**caractérisée en ce que** le second constituant polymère comprend des composants polymères choisis parmi copolymère d'éthylène-propylène, en particulier copolymère d'éthylène-propylène semi-cristallin qui est de préférence sensiblement exempt de diènes, copolymère d'alpha-oléfine, en particulier copolymère d'éthylène-alpha-oléfine et/ou copolymère de propylène-alpha-oléfine, élastomère d'éthylène-propylène-diène, ainsi que des combinaisons de tels matériaux.

8. Film de couverture destiné à fermer un récipient d'emballage, dans lequel le film de couverture est fabriqué à partir d'une feuille composite (1) conformément à l'une des revendications 1 à 7, de préférence par estampage ou par découpage.

9. Procédé pour la fabrication d'une feuille composite (1), en particulier pour la fabrication de films de couverture, dans lequel le procédé présente les étapes suivantes :
- mise à disposition d'une couche d'aluminium (2), et
- extrusion sur la couche d'aluminium (2) d'une couche d'extrusion (3) en plusieurs couches comprenant une couche de promoteur d'adhérence adjacente à la couche d'aluminium (2) et une couche de scellage (6) adjacente à la couche de promoteur d'adhérence (5),
dans lequel la couche de scellage (6) présente une matrice polymère comportant au moins un premier constituant polymère et un second constituant polymère, dans lequel le premier constituant polymère est choisi parmi une polyoléfine et dans lequel le second constituant polymère est choisi parmi plastomères polyoléfiniques et/ou élastomères polyoléfiniques d'une masse volumique respectivement inférieure à 900 kg/m³ ainsi que des combinaisons de tels matériaux, **caractérisé en ce qu'**une charge minérale est ajoutée à la matrice polymère de la couche de scellage (6) comme additif de force de pelage, en particulier du talc, dans une proportion située entre 10 et 35 % en poids, **en ce que** la couche d'extrusion (3) présente une masse surfacique totale allant de 10 à 18 g/m², en particulier située entre 10 et 15 g/m², **et en ce que** la masse surfacique de la couche de promoteur d'adhérence (5) est située entre 3 et 5 g/m² et la masse surfacique de la couche de scellage (6) comportant l'additif de force de pelage est située entre 6 et 10 g/m².

10. Procédé selon la revendication 9, **caractérisé en ce que** la proportion du premier constituant polymère dans la matrice polymère est de préférence située entre environ 30 et environ 70 % en poids.

11. Procédé selon la revendication 9 ou 10, **caractérisé en ce que** le premier constituant polymère est un polyéthylène, de préférence un polyéthylène basse densité.

12. Procédé selon l'une des revendications 9 à 11, **caractérisé en ce que** la proportion du second constituant polymère dans la matrice polymère est située entre 30 et 70 % en poids.

13. Procédé selon l'une des revendications 9 à 11, **caractérisé en ce que** la couche d'aluminium (2) est formée d'une feuille d'aluminium de préférence souple ou semi-rigide d'une épaisseur allant de 10 µm à 70 µm, en particulier de 20 à 38 µm.

14. Procédé selon l'une des revendications 9 à 13, **caractérisé en ce que** la couche d'extrusion (3) présente une couche de recouvrement (7) extérieure qui est adjacente à la couche de scellage (6) et qui présente de préférence une masse surfacique située entre 1 et 3 g/m².

15. Procédé pour la fabrication d'un film de couverture destiné à fermer un récipient d'emballage, dans lequel le film de couverture est de préférence fabriqué par estampage ou découpage dans une feuille composite (1) qui a été fabriquée par un procédé conformément à l'une des revendications 9 à 14.
